# EUROPÄISCHE PATENTANMELDUNG

(11) **EP 4 672 533 A1**
(43) Veröffentlichungstag der Anmeldung: **31.12.2025**
(21) Anmeldenummer: 24184630.2
(22) Anmeldetag: 26.06.2024
(51) Int. Cl.: H02J 1/08, H01M 8/04, H02J 1/14

(54) **ELEKTRISCHE ANORDNUNG FÜR EIN BRENNSTOFFZELLENSYSTEM**

(71) Anmelder: Carl Freudenberg KG, 69469 Weinheim (DE)
(72) Erfinder: Woll, Dominik, 85540 Haar (DE); Bogenschütz, Thomas, 80992 München (DE); Stefener, Manfred, 81735 München (DE)

(57) **Zusammenfassung**

Die Erfindung betrifft eine elektrische Anordnung für ein Brennstoffzellensystem (7) umfassend: einen elektrischen Leistungsstrang (10), eingerichtet zur elektrischen Verbindung einer Brennstoffzelle (5) mit einer Applikation (1), einen Gleichspannungswandler (4), eingerichtet zur Spannungswandlung einer Eingangsspannung auf eine Ausgangsspannung, wobei der Gleichspannungswandler (4) einen ersten Anschluss (41) aufweist, der eingerichtet ist, mit der Brennstoffzelle (5) verbunden zu werden, eine bidirektionale, galvanische Trenneinrichtung (3) eingerichtet zur elektrischen Trennung des elektrischen Leistungsstranges (10), wobei die bidirektionale galvanische Trenneinrichtung (3) einen zweiten Anschluss (30) aufweist, der eingerichtet ist, mit der Applikation (1) elektrisch verbunden zu werden, eine Verbindungsleitung (8), welche den Gleichspannungswandler (4) mit der Trenneinrichtung (3) elektrisch verbindet, und einen Abzweigungspunkt (9), von welchem eine Abzweigleitung (90) an der Verbindungsleitung (8) abzweigt, wobei die Abzweigleitung (90) eingerichtet ist, mit einem Hilfskomponentensystem (6) des Brennstoffzellensystems (7) verbunden zu werden.

## Beschreibung

Die vorliegende Erfindung betrifft eine elektrische Anordnung für ein Brennstoffzellensystem mit einem verbesserten elektrischen Leistungsstrang mit einer bidirektionalen galvanischen Trenneinrichtung, ein Brennstoffzellensystem mit einer derartigen elektrischen Anordnung sowie eine Verwendung eines derartigen Brennstoffzellensystems insbesondere in einer maritimen, Automotive und/oder Heavy-Duty-Applikation.

Brennstoffzellensysteme sind aus dem Stand der Technik in unterschiedlichen Ausgestaltungen bekannt. Das Brennstoffzellensystem kann hierbei als Einzel-Stack oder als Verschaltung mehrerer einzelner Stacks ausgeführt sein. Hierbei sind üblicherweise alle Komponenten des Brennstoffzellensystems, insbesondere die Brennstoffzelle und Hilfskomponentensysteme (Balance-ofplant-Komponenten) auf einem gemeinsamen DC-Bus System wie die Applikation angeordnet. Hierbei ist der Brennstoffzellen-Stack gar nicht vom DC-Bus System getrennt, sodass es häufig zu unerwünschten Ableitströmen zur Erde an der Applikation oder anderen elektrischen Störungen kommen kann. Insbesondere wenn die Applikation eine Batterie mit einem sehr empfindlichen Batterie-Management-System aufweist, können sich für das Batterie-Management-System unerwünschte hohe Belastungen ergeben, welche im Extremfall zu einem Ausfall des Batterie-Management-Systems und/oder anderer Systeme der Applikation führen können. Die US 11329484 B2 zeigt allgemein eine Energieliefervorrichtung mit mehreren in Reihe geschalteten Nutzeinheiten

Es ist daher Aufgabe der vorliegenden Erfindung eine elektrische Anordnung für ein Brennstoffzellensystem sowie ein Brennstoffzellensystem bereitzustellen, welche bei einfachem Aufbau und einfacher, kostengünstiger Herstellbarkeit eine signifikante Reduzierung von Störgrößen auf eine Applikation verhindern. Diese Aufgabe wird durch eine elektrische Anordnung mit den Merkmalen des Anspruchs 1, ein Brennstoffzellensystem mit den Merkmalen des Anspruchs 14 und eine Verwendung eines Brennstoffzellensystems gemäß Anspruch 15 gelöst. Die Unteransprüche zeigen jeweils bevorzugte Weiterbildungen der Erfindung.

Die erfindungsgemäße elektrische Anordnung für ein Brennstoffzellensystem mit den Merkmalen des Anspruchs 1 weist den Vorteil auf, dass ein elektrischer Leistungsstrang des Brennstoffzellensystems, welcher eingerichtet ist, um eine elektrische Verbindung zwischen einer Brennstoffzelle und einer Applikation herzustellen, eine bidirektionale, galvanische Trenneinrichtung aufweist. Derartige bidirektionale, galvanische Trenneinrichtungen werden bisher in Brennstoffzellensystemen nicht verwendet. Ein großer Vorteil der bidirektionalen galvanischen Trenneinrichtung liegt dabei darin, dass eine galvanische Trennung zwischen dem Brennstoffzellensystem und der Applikation möglich ist. Somit haben Störgrößen aus dem Brennstoffzellensystem keinen Einfluss auf Bauteile der Applikation, insbesondere einen DC-Bus der Applikation und daran angeordnete Bauteile, und umgekehrt Störgrößen aus der Applikation keinen Einfluss auf die Brennstoffzelle. Somit können insbesondere leitungsgebundene Störeinkopplungen in Bauteile der Applikation vermieden werden. Dadurch ergibt sich eine deutlich reduzierte Belastung der Komponenten der Applikation, was durch eine entsprechend angepasste Auslegung der einzelnen Komponenten zu großen Kostenvorteilen führen kann.

Dies wird erfindungsgemäß dadurch erreicht, dass die elektrische Anordnung einen elektrischen Leistungsstrang aufweist, welcher für eine elektrische Verbindung einer Brennstoffzelle mit einer Applikation eingerichtet ist. Ferner umfasst die elektrische Anordnung einen Gleichspannungswandler im Leistungsstrang, welcher eingerichtet ist, eine Spannungsumwandlung einer Eingangsspannung auf eine Ausgangspannung auszuführen, wobei der Gleichspannungswandler einen ersten Anschluss aufweist. Der erste Anschluss ist eingerichtet, mit der Brennstoffzelle verbunden zu werden. Die elektrische Anordnung umfasst ferner die bidirektionale, galvanische Trenneinrichtung im Leistungsstrang, eingerichtet zur elektrischen Trennung des elektrischen Leistungsstranges von der Applikation, wobei die bidirektionale galvanische Trenneinrichtung einen zweiten Anschluss aufweist, der eingerichtet ist, mit der Applikation verbunden zu werden. Die elektrische Anordnung umfasst ferner eine Verbindungsleitung, welche eine Abzweigleitung aufweist. Die Verbindungsleitung verbindet den Gleichspannungswandler mit der bidirektionalen galvanischen Trenneinrichtung. Am Abzweigpunkt ist die Abzweigleitung an der Verbindungsleitung angeordnet, wobei die Abzweigleitung eingerichtet ist, mit einem Hilfskomponentensystem des Brennstoffzellensystems verbunden zu werden. Das Hilfskomponentensystem (Balance-of-plant-(BOP)-System) umfasst alle Hilfssysteme der Brennstoffzelle außer der Brennstoffzelle selbst und des Leistungsstrangs, insbesondere Versorgung mit Luft und Wasser, Pumpen, Verdichter, Kühlungsvorrichtungen, Steuereinheiten usw. Die bidirektionale galvanischen Trenneinrichtung zwischen den Komponenten des Brennstoffzellensystems und der Applikation ermöglicht ferner reduzierte Verluste, sodass ein höherer Gesamtwirkungsgrad des Brennstoffzellensystems erreicht wird. Hierbei ergeben sich insbesondere reduzierte Störeinflüsse vom Brennstoffzellensystem nach außen als auch mögliche Störeinflüsse der Applikation auf Komponenten des Brennstoffzellensystems nach innen. Ferner ermöglicht die bidirektionale galvanische Trenneinrichtung auch eine Energieübertragung in beide Richtungen, d.h. von der Brennstoffzelle zur Applikation und von der Applikation, wenn diese insbesondere einen Batteriespeicher oder dergleichen aufweist, zur Brennstoffzelle. Hierbei kann insbesondere eine Energieübertragung mit gleichem Spannungsniveau in beiden Richtungen ermöglicht werden.

Vorzugsweise weist die bidirektionale galvanische Trenneinrichtung eine erste Spannungsüberwachung auf einer Brennstoffzellenseite und/oder eine zweite Spannungsüberwachung auf einer Applikationsseite auf. Die Spannungsüberwachungen sind vorzugsweise mit einer Steuereinheit verbunden, welche eingerichtet ist, die bidirektionale galvanische Trenneinrichtung basierend auf den Werten der überwachten Spannungen anzusteuern.

Vorzugsweise ist das Hilfskomponentensystem der elektrischen Anordnung eingerichtet, mit der Brennstoffzelle Energie und/oder Daten und/oder Signale auszutauschen, wobei dieses insbesondere Vorrichtungen zur Versorgung der Brennstoffzelle mit Luft und Wasser, Pumpen, Verdichter, Kühlungsvorrichtungen und Steuereinheiten umfasst.

Somit kann ein Austausch von Energie und/oder Daten und/oder Signalen, insbesondere Befehlen, in beiden Richtungen zwischen der Brennstoffzelle und den Hilfskomponenten erfolgen. Hierbei können auch die Hilfskomponenten untereinander verknüpft sein.

Weiter bevorzugt weist die bidirektionale galvanische Trenneinrichtung eine Isolationsüberwachung auf. Die Isolationsüberwachung ist vorzugsweise auf der Brennstoffzellenseite angeordnet. Falls ein vorbestimmter Schwellenwert der elektrischen Isolation überschritten wird, kann das Brennstoffzellensystem von der Applikation abgekoppelt werden.

Vorzugsweise umfasst die bidirektionale galvanische Trenneinrichtung einen primärseitigen Filter, ein primärseitiges Leistungsteil, einen Resonanzpfad mit Übertrager, ein sekundäres Leistungsteil und einen sekundären Filter. Die bidirektionale galvanische Trenneinrichtung ist somit vorzugsweise gespiegelt am Resonanzpfad aufgebaut.

Weiter bevorzugt umfasst der Leistungsstrang ferner eine Unterbrechungseinheit (Disconnect Unit, DCU). Die Unterbrechungseinheit ist im elektrischen Leistungsstrang zwischen der galvanischen Trenneinrichtung und der Applikation angeordnet. Die Unterbrechungseinheit ist vorzugsweise direkt in Reihe mit der bidirektionalen galvanischen Trenneinrichtung angeordnet. Die Unterbrechungseinheit ist eine elektrische Komponente, welche den elektrischen Gleichspannungsleistungsstrang des Brennstoffzellensystems mit der Applikation verbindet oder trennt. Insbesondere kann eine allpolige Trennung des Brennstoffzellensystems und der Applikation auf einem DC-Bus ermöglicht werden. Ferner kann insbesondere eine definierte Zuschaltung mit Vorladung und eine Absicherung aller Stränge gegen einen Überstrom ermöglicht werden.

Die Unterbrechungseinheit weist vorzugsweise eine Einrichtung zur Überwachung von Isolationswiderständen auf. Somit kann auf der zur Applikation gerichteten Seite eine Isolationsmessung ausgeführt werden und basierend auf einem Ergebnis der Isolationsmessung die Unterbrechungseinheit angesteuert werden. Die Einrichtung zur Überwachung von Isolationswiderständen ist vorzugsweise auf einer Brennstoffzellenseite der Unterbrechungseinheit angeordnet.

Weiter bevorzugt weist die Unterbrechungseinheit mehrere Sensoren, insbesondere einen Temperatursensor und/oder einen Spannungssensor und/oder einen Stromsensor auf.

In einer bevorzugten Ausgestaltung weist die Unterbrechungseinheit eine eigene Steuereinheit auf. Die Steuereinheit der Unterbrechungseinheit ist vorzugsweise direkt an der Unterbrechungseinheit selbst angeordnet. Vorzugsweise weist der Gleichspannungswandler ebenfalls eine Vielzahl von Sensoren, insbesondere einen Temperatursensor, einen Spannungssensor und/oder einen Stromsensor auf.

Der Gleichspannungswandler ist vorzugsweise ein Hochsetzsteller, insbesondere mit Freilaufdioden. Vorzugsweise weist der Hochsetzsteller mehrere Hochsetzstufen auf, wobei die Hochsetzstufen weiter bevorzugt phasenversetzt betrieben werden. Insbesondere ermöglicht der Hochsetzsteller ein Hochsetzen einer Spannung des Brennstoffzellen-Potentials auf ein Applikations-Potential. Auch kann der Hochsetzsteller vorzugsweise eine Leistungsregelung ermöglichen.

Gemäß einer weiteren bevorzugten Ausgestaltung der Erfindung sind wenigstens zwei elektrische Anordnungen parallel angeordnet. Besonders bevorzugt sind genau sechs elektrische Anordnungen parallel zueinander angeordnet. Jede elektrische Anordnung ist gleich aufgebaut und weist eine eigene bidirektionale galvanische Trenneinrichtung auf. Vorzugsweise ist jede elektrische Anordnung an einem DC-Bus der Applikation angeschlossen. Ferner betrifft die vorliegende Erfindung ein Brennstoffzellensystem mit wenigstens einer Brennstoffzelle und wenigstens einer erfindungsgemäßen elektrischen Anordnung. Besonders bevorzugt sind mehrere Brennstoffzellensysteme zu einem Brennstoffzellenmodul zusammengefasst. Weiterhin betrifft die vorliegende Erfindung eine Verwendung eines Brennstoffzellensystems in einer Applikation. Die Applikation ist vorzugsweise eine maritime Anwendung oder eine Automotive-Anwendung oder eine Heavy-Duty-Anwendung, insbesondere eine Eisenbahnanwendung.

Nachfolgend werden bevorzugte Ausführungsbeispiele der Erfindung unter Bezugnahme auf die begleitende Zeichnung im Detail beschrieben. In der Zeichnung ist:
- Fig. 1: Eine schematische Darstellung eines Brennstoffzellensystems mit einer elektrischen Anordnung gemäß einem ersten Ausführungsbeispiel der Erfindung,
- Fig. 2: eine schematische vergrößerte Teildarstellung von Figur 1,
- Fig. 3: eine schematische Darstellung einer bidirektionalen galvanischen Trenneinrichtung des Brennstoffzellensystems von Figur 1,
- Fig. 4: eine schematische Ansicht einer Unterbrechungseinheit (DCU) des Brennstoffzellensystems von Figur 1,
- Fig. 5: eine schematische Darstellung eines Gleichspannungswandlers des Brennstoffzellensystems von Figur 1,
- Fig. 6: eine schematische Schnittansicht der elektronischen Anordnung von Figur 1 und
- Fig. 7: eine schematische Darstellung einer bidirektionalen galvanischen Trenneinrichtung gemäß einem zweiten Ausführungsbeispiel der Erfindung.

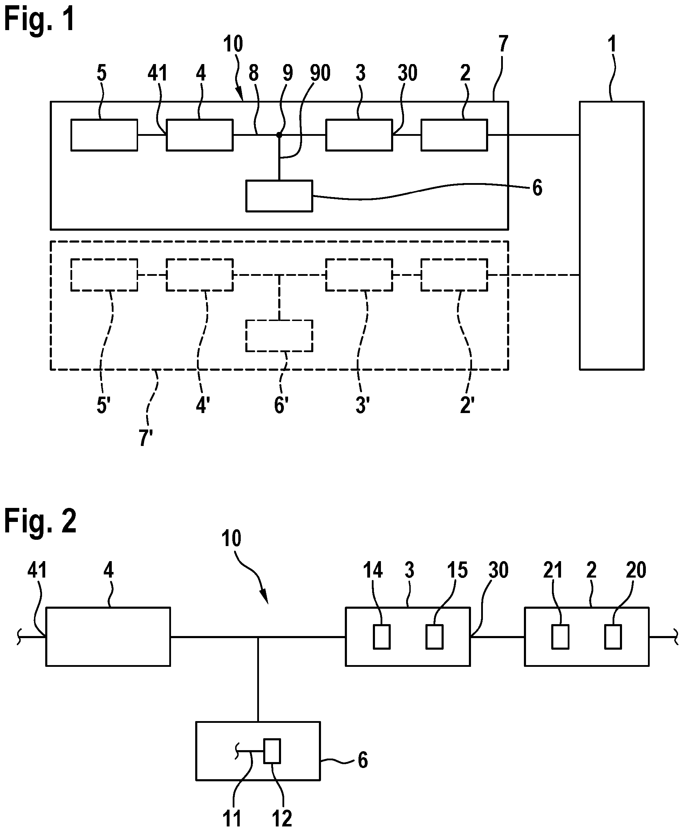

Nachfolgend wir unter Bezugnahme auf die Figuren 1 bis 6 ein Brennstoffzellensystem 7 mit einer elektrischen Anordnung mit einem elektrischen Leistungsstrang 10 gemäß einem bevorzugten Ausführungsbeispiel der Erfindung im Detail beschrieben.

Der elektrische Leistungsstrang 10 ist eingerichtet, um eine elektrische Verbindung zwischen einer Brennstoffzelle 5 und einer Applikation 1, bspw. einer maritimen oder Automotive-Applikation herzustellen.

Die Brennstoffzelle 5 ist ein Brennstoffzellen-Stack und bildet die elektrische Quelle des Systems. In der Brennstoffzelle wird Energie bereitgestellt, indem chemische Energie aus Wasserstoff in elektrische Energie umgewandelt wird. Eine Anzahl von Zellen der Brennstoffzelle und ein Arbeitspunkt bestimmen im Wesentlichen die resultierende Ausgangsspannung. Ein resultierender Ausgangsstrom wird insbesondere durch eine Größe der aktiven Zellfläche bestimmt.

Die elektrische Anordnung 10 umfasst einen Gleichspannungswandler 4, welcher eingerichtet ist, eine Spannungswandlung einer Eingangsspannung auf eine Ausgangsspannung auszuführen. Der Gleichspannungswandler 4 weist einen ersten Anschluss 41 auf, über den der Gleichspannungswandler 4 mit der Brennstoffzelle 5 verbunden ist (vergleichen Figur 2).

Der Gleichspannungswandler 4 ist in diesem Ausführungsbeispiel ein Hochsetzsteller, welcher insbesondere eine Spannung des Brennstoffzellenpotentials auf ein Applikationspotential hochsetzt. Der Gleichspannungswandler 4 kann ferner Sensorik hinsichtlich Temperatur, Spannung und Strom aufweisen. Ferner übernimmt der Gleichspannungswandler 4 eine Leistungsregelung der elektrischen Leistung der Brennstoffzelle 5.

Die elektrische Anordnung 10 umfasst ferner eine bidirektionale, galvanische Trenneinrichtung 3. Die bidirektionale galvanische Trenneinrichtung 3 ist eingerichtet zur elektrischen Trennung des elektrischen Leistungsstrangs 10, wobei die Trenneinrichtung 3 einen zweiten Anschluss 30 aufweist. Der zweite Anschluss 30 ist eingerichtet, mit der Applikation 1 verbunden zu werden.

Wie aus den Figuren 1 und 2 ersichtlich ist, ist ferner eine Verbindungsleitung 8 vorgesehen, welche den Gleichspannungswandler 4 mit der bidirektionalen, galvanischen Trenneinrichtung 3 verbindet. In der Verbindungsleitung 8 ist ein Abzweigungspunkt 9 angeordnet, von welchem aus eine Abzweigleitung 90 von der Verbindungsleitung 8 abgeht. Über die Abzweigleitung 90 erfolgt eine elektrische Verbindung mit einem Hilfskomponentensystem 6 (Balance-of-plant-System) des Brennstoffzellensystems 7.

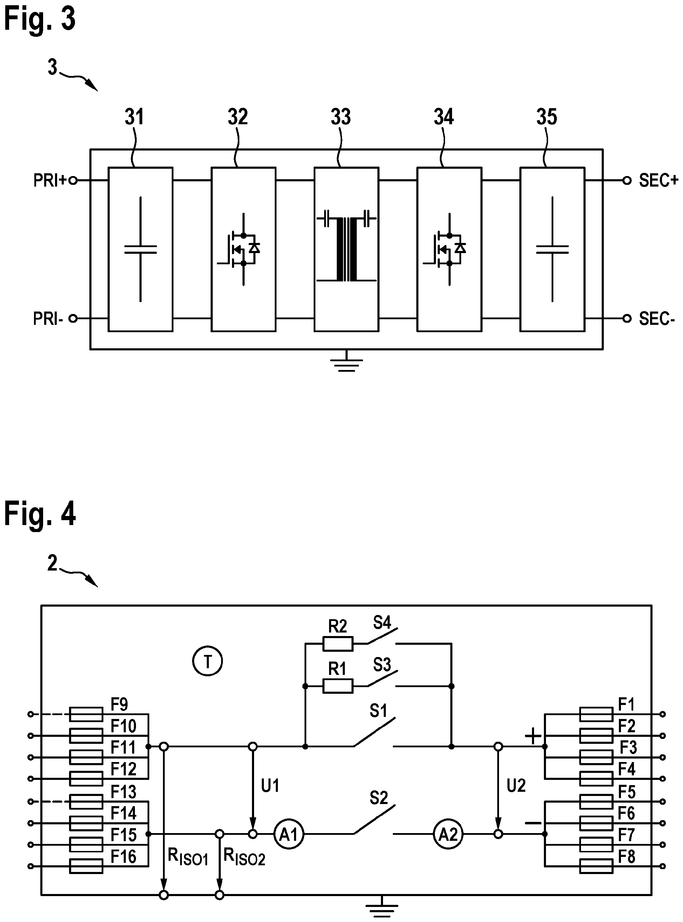

Das Hilfskomponentensystem 6 umfasst alle weiteren Komponenten des Brennstoffzellensystems 7, insbesondere Pumpen, Kompressoren, Sensoren, Wärmetauscher, Dichtungen, Kühler und/oder Befeuchter etc. Das Hilfskomponentensystem 6 ist schematisch in den Figuren 1 und 2 dargestellt. Figur 3 zeigt im Detail die bidirektionale, galvanischen Trenneinrichtung 3. Wie in Figur 3 gezeigt, sind die Hauptbauteile der Trenneinrichtung 3 ein primärseitiger Filter 31, ein primärseitiges Leistungsteil 32, ein Resonanzpfad 33 mit Übertrager, ein sekundäres Leistungsteil 34 und ein sekundärer Filter 35. Die Komponenten sind dabei wie in Figur 3 gezeigt in Reihe angeordnet. Eine Hauptaufgabe der Trenneinrichtung 3 ist dabei eine galvanisch getrennte Energieübertragung von der Primärseite, gekennzeichnet durch PRI+ und PRI-, zur Sekundärseite, gekennzeichnet durch SEC+ und SEC-, und umgekehrt mit gleichem Spannungsniveau. Die Primärseite ist über die Verbindungsleitung 8 mit dem Gleichspannungswandler 4 verbunden und die Sekundärseite ist elektrisch mit einer Unterbrechungseinheit 2 (Disconnect-Unit (DCU)) verbunden.

Die bidirektionale, galvanischen Trenneinrichtung 3 weist eine erste Spannungsüberwachung 14 und eine zweite Spannungsüberwachung 15 auf (vergleiche Figur 2).

Die Unterbrechungseinheit 2 ist eine elektrische Komponente, welche den elektrischen Leistungsstrang 10 des Brennstoffzellensystems 7 mit der Applikation 1 verbindet oder trennt. Die Unterbrechungseinheit 2 ermöglicht eine allpolige Verbindung und Trennung zwischen dem Brennstoffzellensystem 7 und der Applikation 1 auf einem DC-Bus. Hierbei ist eine definierte Zuschaltung mit Vorladung und eine Absicherung aller elektrischen Stränge gegenüber einem möglichen Überstrom möglich. Ferner kann eine Isolationsüberwachung 21 eine Isolationsmessung insbesondere auf der zur Brennstoffzelle 5 gerichteten Seite der Unterbrechungseinheit 2 vornehmen sowie Sensoren zur Erfassung von Temperatur, Spannung und Strom vorgesehen werden.

Die Unterbrechungseinheit 2 ist im Detail aus Figur 4 ersichtlich. Wie in Figur 4 gezeigt, ist die allpolige Trennung durch jeweils eine Trenneinrichtung auf jedem Pol realisiert. Hierbei weist die Unterbrechungseinrichtung 2 ein Hauptschütz S1 zur Trennung des positiven Pfades und ein Hauptschütz S2 zur Trennung des negativen Pfades auf. Parallel zum positiven Hauptschütz S1 befindet sich eine zusätzliche Trenneinrichtung S3 mit in Reihe geschalteter ohmsche Last R1. Parallel hierzu kann eine weitere optionale Trenneinrichtung S4 mit in Reihe geschalteter ohmsche Last R2 angeordnet sein. Eine Spannungsmessung U2 vor den Hauptschützen S1, S2 auf der Applikationsseite und eine Spannungsmessung U1 nach den Hauptschützen S1, S2 auf der Seite der Brennstoffzelle kann vorgesehen werden.

Weiterhin ist, wie in Figur 4 gezeigt, eine Strommessung A2 auf einem DC-Pfad an der Applikationsseite und eine Strommessung A1 auf dem DC-Pfad an der Seite der Brennstoffzelle vorgesehen. Innerhalb der Unterbrechungseinheit 2 können mehrere Temperatursensoren, schematisch in Figur 4 mit T bezeichnet, angeordnet werden, insbesondere um eine Innenraumtemperatur zu messen. Weiterhin ist auf der Seite der Brennstoffzelle eine Isolationsüberwachung R_ISO 1 und R_ISO 2 angeordnet. Auf der Applikationsseite ist in diesem Ausführungsbeispiel eine Anbindung zur Applikation 1 pro Pol aus vielen abgesicherten Strängen vorgesehen, wobei die Bezeichnungen F1, F2, F3 und F4 für den positiven Strang und die Bezeichnungen F5, F6, F7 und F8 für den negativen Strang gewählt sind.

Auf der Seite der Brennstoffzelle findet eine Aufteilung auf mehrere Stränge statt. Die Stränge enden vorzugsweise jeweils in einem Modul. Jeder Strang ist ebenfalls separat abgesichert. Der positive Strang ist mit F9, F10, F11 und F12 bezeichnet und der negative Strang ist mit F13, F14, F15 und F16 bezeichnet. Die Unterbrechungseinheit 2 ist ferner dazu ausgebildet, einen DC-Bus des Brennstoffzellensystems 7 zum DC-Bus der Applikation 1 entsprechend den nachfolgenden Schritten zuzuschalten:
Zuerst wird das Hauptschütz S2 des negativen Hauptstranges geschlossen. Anschließend beginnt eine Vorladung, wobei das Schütz S3 als Vorladeschütz geschlossen wird und ein definierter Strom, begrenzt durch die ohmsche Last R1 zu einer Vorladung der im Brennstoffzellensystem verbauten Komponenten führt. Nach Ablauf einer definierten Zeit schaltet das Schütz S4 (weiteres Vorladeschütz) zu und sorgt mit der ohmschen Last R2 für einen höheren Vorladestrom. Dadurch wird eine Potentialdifferenz der beiden Potentiale U1 und U2 verringert. Anschließend erfolgt ein Zuschalten des positiven Hauptschützes S1 mit dem nachfolgenden Öffnen der Schütze S3 und S4.

Die Unterbrechungseinheit 2 umfasst, wie in Figur 2 schematisch dargestellt, eine eigene Steuereinheit 20 sowie ein Einrichtung 21 zur Isolationsüberwachung. Die Einrichtung zur Isolationsüberwachung ist brennraumseitig angeordnet und die Steuereinheit 20 ist applikationsseitig angeordnet.

Somit ermöglicht die Unterbrechungseinheit 2 eine allpolige Trennung des DC-Buses zur Applikation 1, wobei insbesondere auch eine Messung von Spannung, Strom, Temperatur und eine Überwachung der Isolation möglich ist. Weiterhin kann auch eine definierte Vorladung für alle elektrischen Leistungskomponenten im Brennstoffzellensystem 7 sowie eine Absicherung aller Stränge sowohl in Richtung zur Brennstoffzelle als auch in Richtung zur Applikation ermöglicht werden.

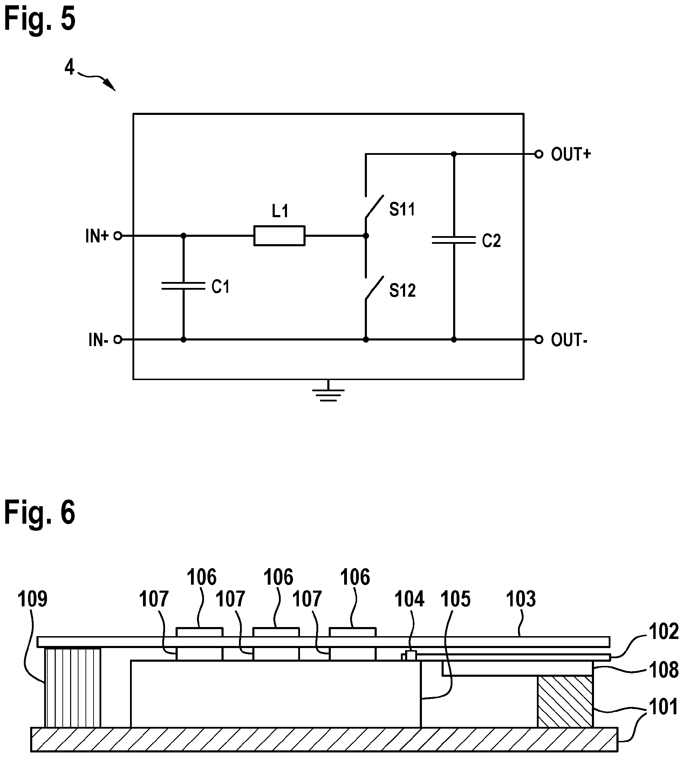

Figur 5 zeigt beispielhaft den Gleitspannungswandler 4 in Form eines Hochsetzstellers. An der Eingangsseite des Gleichspannungswandlers 4, gekennzeichnet durch IN+ und IN-, ist die Brennstoffzelle 5 angeordnet. Eingangsseitig befindet sich eine Kapazität C1 in Reihe mit einer Drossel L1. Diese Drossel führt auf einen Mittelabgriff einer Halbbrücke, bestehend aus den Schaltern S11 und S12. Parallel zu den Schaltern S11, S12 können antiparallele Freilaufdioden, welche in Figur 5 nicht gezeigt sind, angeordnet sein. An einer Ausgangsseite befindet sich eine Kapazität C2. Die Ausgangsseite ist durch die Bezeichnungen OUT+ und OUT- bezeichnet. Eine wie in Figur 5 gezeigte Stufe kann insbesondere aufgrund von höheren Strömen mehrfach verwendet werden und insbesondere phasenversetzt (Interleaved) betrieben werden, wobei insbesondere Filter und Messschaltungen nicht im Detail dargestellt sind. Wenn der Gleichspannungswandler 4 als Hochsetzsteller ausgebildet ist, hat der Hochsitzsteller die Aufgabe innerhalb des Brennstoffzellensystems die Spannung der Brennstoffzelle 5 auf die Spannung der Applikation 1 hochzusetzen. Ebenso kann auch eine interne Stromregelung einer Leistungsregelung realisiert werden. Die Spannung wird hierbei von der Applikation 1 vorgegeben und kann in einem vorgegebenen Bereich variieren. Da die Brennstoffzelle 5 je nach Arbeitsbereich eine stark veränderliche Spannungskennlinie aufweisen kann, kann mit dem Hochsetzsteller diese sich stark verändernde Spannung kompensiert werden.

Somit sind die Brennstoffzelle 5, der Gleichspannungswandler 4, die bidirektionale, galvanische Trenneinrichtung 3 und die Unterbrechungseinheit 2 in Reihe, wie in Figur 1 gezeigt, dargestellt. Das Hilfskomponentensystem 6 ist an der Verbindungsleitung 8 im Brennstoffzellensystem 7 angeordnet. Bei einer Parallelschaltung mehrerer Brennstoffzellensysteme 7, 7` (siehe Figur 1) kann durch die erfindungsgemäße Idee somit sichergestellt werden, dass Anforderungen und Grenzwerte hinsichtlich eines Isolationswiderstands über eine Lebensdauer der elektrischen Anordnung 10 eingehalten werden. Da jedes Brennstoffzellensystem eine eigene bidirektionale, galvanische Trenneinrichtung 3 aufweist, kann ein stabiler und hoher Isolationswiderstand unabhängig von einer Anzahl der einzelnen Brennstoffzellensysteme 7, 7` sichergestellt werden. Somit kann der durch die Parallelschaltung der Brennstoffzellensysteme 7, 7` ein verminderter Gesamtisolationswiderstand ausgeglichen werden, wodurch die Grenzwerte an den Isolationswiderstand über die Lebensdauer eingehalten werden können.

Vorzugsweise erfolgt eine Ansteuerung der Komponenten, insbesondere der Brennstoffzelle 5, des Gleichspannungswandlers 4 und der bidirektionalen galvanischen Trenneinrichtung 3 mit jeweils einer eigenen Logik (Steuereinheit). Vorzugsweise ist eine übergeordnete Steuereinheit vorgesehen, welcher Information und Daten der einzelnen Komponenten und Messschaltungen, ausgenommen die Unterbrechungseinheit 2, zugeführt werden. Die Trenneinrichtungen der Unterbrechungseinheit 2 werden vorzugweise von einer eigenen Steuereinheit der Unterbrechungseinheit 2 angesteuert. Eine Auswertung von Daten der Sensoren hinsichtlich Spannung, Strom und Temperatur erfolgt über diese Steuereinheit der Unterbrechungseinheit 2.

Figur 6 zeigt eine schematische Teilschnittansicht einer Gate-Treiber-Ansteuerung. Hierbei ist eine Sandwich-Bauform vorgesehen, welche es ermöglicht, dass elektronische Bauteile 108 der Gate-Treiber-Ansteuerung 102 von unten direkt an eine Kühlstruktur 101 angebunden werden können und gleichfalls eine elektrische Anbindung an Modul Ansteuer-Pins 104 ermöglicht werden. Eine Sandwich-Bauweise wurde ebenfalls bei einer Verbindung zwischen Leistungshalbleitermodulen 105 und DC-Kapazitäten 109 und der Leistungsplatine 103 verwendet. Die DC-Link Kapazitäten 109 sind nach unten thermisch an die Kühlstruktur 101 angebunden und nach oben elektrisch über die Leistungsplatine 103 direkt mit den Halbleitermodulen 105 verbunden. Oberhalb der Leistungsplatine 3 befindet sich eine Busbar 106 welche zum Eingang bzw. Ausgang der Vorrichtung führt. Damit kann mit einem Kontaktpunkt, nämlich einer Schraube in einem Modulpin 107, die Busbar 106, die Leistungsplatine 103, ggf. mit diversen Messschaltungen, eine DC-Kapazität 109 und das Leistungshalbleitermodul 105 selbst elektrisch angebunden werden. Somit kann ein besonders niederinduktiver Aufbau realisiert werden, welcher dazu ausgebildet ist, keine größeren Störungen in das Brennstoffzellensystem 7 einzubringen.

Weiterhin kann insbesondere durch die Anordnung der Isolationsüberwachung 21 auf der Eingangsseite eine kontinuierliche Information des Isolationswiderstands der Brennstoffzelle 5 ermittelt und weitergeleitet werden. Ein DC-Bus 11 des Hilfskomponentensystems 6 verbindet alle Hilfskomponenten des Hilfskomponentensystems 6. Hierbei kann auch eine Batterie 12 mit umfasst sein.

Die parallelgeschalteten Brennstoffzellensysteme 7` sind gleich wie das Brennstoffzellensystem 7 aufgebaut, was in Figur 1 durch die gestrichelte Darstellung mit den Bezugszeichen 2`, 3`, 4`, 5` und 6` dargestellt ist.

Die Erfindung ermöglicht somit eine Anordnung einer beliebigen Anzahl von parallel geschalteter Brennstoffzellensysteme 7, 7` ohne einen markanten Einfluss auf den Systemisolationswiderstand zu haben.

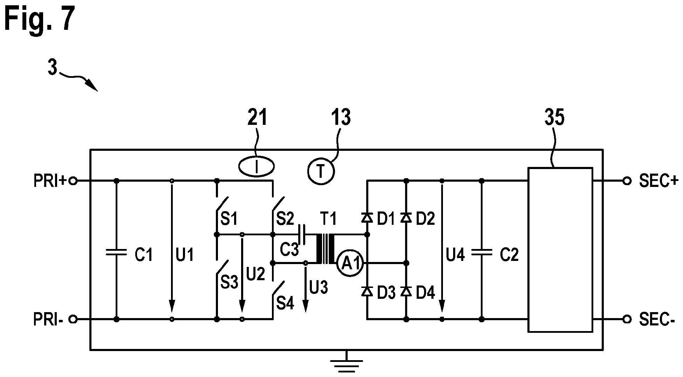

Figur 7 zeigt eine alternative Ausgestaltung einer bidirektionalen, galvanischen Trenneinrichtung 3. Auf der Eingangsseite (PRI-, PRI+), welche mit dem Gleichspannungswandler 4 verbunden ist, ist eine Eingangskapazität C1 zum Glätten der DC-Bus Spannung des Brennstoffzellensystems 7 angeordnet. Es folgt eine Vollbrücke, umfassend zwei Halbbrücken, mit aus vier in H-Form eingeordneten Leistungshalbleiterschaltern S1, S2, S3, S4. Hierbei sind immer zwei Schalter in Reihe zwischen dem positiven und dem negativen DC-Bus Potential angeordnet.

Zwischen den Halbleitern befindet sich ein Mittelabgriff. Dem Mittelabgriff der einen Halbbrücke (S1, S3) folgen seriell angebundene Resonanzkapazitäten C3 die Resonanzkapazitäten sind auf der anderen Seite mit der primärseitigen Wicklung eines Hochfrequenz-Übertragers T1 verbunden. Der andere Anschluss der Primärseite des Hochfrequenz-Übertragers T1 ist mit dem Mittelabgriff der zweiten Halbbrücke (S2, S4) verbunden.

Auf der Sekundärseite des Hochfrequenz-Übertragers T1 befindet sich ein Vollwegegleichrichter umfassend vier Dioden D1, D2, D3 und D4. Jeweils zwei Dioden sind in Reihe zwischen dem positiven und negativen DC-Bus Potential verbunden. Ein Mittelabgriff zwischen zwei Dioden eines Zweigs D1/D3 oder D2/D4 gilt jeweils auf einen Anschluss eines sekundärseitigen Anschlusses des Hochfrequenz-Übertragers T1.

An der Ausgangsseite folgt eine weitere Kapazität C2 gefolgt von einem Filter 35. Zusätzlich befinden sich Messschaltungen innerhalb der bidirektionalen, galvanischen Trenneinrichtung 3, wobei auf der Eingangsseite eine Spannungsmessung und Überwachung U1 und auf der Ausgangsseite eine weitere Spannungsmessung und Überwachung U4 angeordnet ist. Weitere Spannungsmessungen U2 und U3 werden für eine Nullspannungserkennung (ZVS, Zero-Voltage-Switching) verwendet. Das Bezugszeichen A1 beschreibt eine Überstromdetektion auf der Sekundärseite, welche in Figur 7 mit SEC+ und SEC- gekennzeichnet ist. Beispielhaft für mögliche Sensoren innerhalb der Komponente ist ein Temperatursensor 13 in Figur 7 dargestellt. Somit kann mit diesem Ausführungsbeispiel im Detail eine Isolationsüberwachung 21 auf der Eingangsseite der Trenneinrichtung 3 ermöglicht werden.

Die Figur 7 gezeigte Trenneinrichtung 3 ermöglicht somit eine eins zu eins-Übersetzung der Spannung von der Eingangsseite zur Ausgangsseite. Auf der Eingangsseite wird der DC-Strom von der Vollbrücke aus den Schaltern S1, S2, S3 und S4 zerhackt. Dabei werden die Schalter S1, S2, S3 und S4 immer diagonal getaktet angesteuert. Dies sorgt zusammen mit dem Schwingkreis, der aus der Resonanzkapazität C3 und der Streuinduktivität des Hochfrequenz Übertragers T1 gebildet ist, zu einer sinusförmigen Ausprägung des primärseitigen Stromes des Hochfrequenz Übertragers T1. Dieser Strom wird aufgrund des Übersetzungsverhältnisses von eins auf die Sekundärseite übertragen. Dort erfolgt die Gleichrichtung mithilfe der Dioden D1, D2, D3 und D4.

## Patentansprüche

1. Elektrische Anordnung für ein Brennstoffzellensystem (7) umfassend:
• einen elektrischen Leistungsstrang (10), eingerichtet zur elektrischen Verbindung einer Brennstoffzelle (5) mit einer Applikation (1),
• einen Gleichspannungswandler (4), eingerichtet zur Spannungswandlung einer Eingangsspannung auf eine Ausgangsspannung, wobei der Gleichspannungswandler (4) einen ersten Anschluss (41) aufweist, der eingerichtet ist, mit der Brennstoffzelle (5) verbunden zu werden,
• eine bidirektionale, galvanische Trenneinrichtung (3) eingerichtet zur elektrischen Trennung des elektrischen Leistungsstranges (10), wobei die bidirektionale galvanische Trenneinrichtung (3) einen zweiten Anschluss (30) aufweist, der eingerichtet ist, mit der Applikation (1) elektrisch verbunden zu werden,
• eine Verbindungsleitung (8), welche den Gleichspannungswandler (4) mit der Trenneinrichtung (3) elektrisch verbindet, und
• einen Abzweigungspunkt (9), von welchem eine Abzweigleitung (90) an der Verbindungsleitung (8) abzweigt, wobei die Abzweigleitung (90) eingerichtet ist, mit einem Hilfskomponentensystem (6) des Brennstoffzellensystems (7) verbunden zu werden.

2. Elektrische Anordnung nach Anspruch 1, wobei die bidirektionale, galvanische Trenneinrichtung (3) eine erste Spannungsüberwachung (14) auf einer zur Brennstoffzelle (5) gerichteten Seite und/oder einer zweiten Spannungsüberwachung (15) auf einer zur Applikation (1) gerichteten Seite aufweist.

3. Elektrische Anordnung nach einem der vorherigen Ansprüche, wobei das Hilfskomponentensystem (6) eingerichtet ist, mit der Brennstoffzelle Energie und/oder Daten und/oder Signale auszutauschen, wobei das Hilfskomponentensystem (6) insbesondere Vorrichtungen zur Versorgung der Brennstoffzelle mit Luft und Wasser, Pumpen, Verdichter, Kühlungsvorrichtungen und Steuereinheiten umfasst.

4. Elektrische Anordnung nach einem der vorherigen Ansprüche, wobei die bidirektionale galvanische Trenneinrichtung (3) eine Isolationsüberwachung (21), insbesondere auf der zur Brennstoffzelle (5) gerichteten Seite, aufweist.

5. Elektrische Anordnung nach einem der vorherigen Ansprüche, wobei die bidirektionale, galvanische Trenneinrichtung (3) einen primärseitigen Filter (31), ein primärseitiges Leistungsteil (32) ein Resonanzpfad (33) mit Übertrager, einen sekundärseitigen Leistungsteil (34) und einen sekundärseitigen Filter (35) aufweist.

6. Elektrische Anordnung nach einem der vorherigen Ansprüche, wobei der Leistungsstrang (10) ferner eine Unterbrechungseinheit (2) umfasst, welche im elektrischen Leistungsstrang (10) zwischen der bidirektionalen galvanischen Trenneinrichtung (3) und der Applikation (1) angeordnet ist.

7. Elektrische Anordnung nach Anspruch 6, wobei die Unterbrechungseinheit (2) eine Einrichtung zur Überwachung von Isolationswiderständen umfasst.

8. Elektrische Anordnung nach Anspruch 7, wobei die Einrichtung zur Überwachung von Isolationswiderständen in der Unterbrechungseinheit (2) an der zur Brennstoffzelle (5) gerichteten Seite angeordnet ist.

9. Elektrische Anordnung nach einem der Ansprüche 6 bis 8, wobei die Unterbrechungseinheit (2) Sensoren für Temperatur, Spannung und/oder Strom aufweist.

10. Elektrische Anordnung nach einem der Ansprüche 6 bis 9, wobei die Unterbrechungseinheit (2) eine eigene Steuereinheit (20) aufweist.

11. Elektrische Anordnung nach einem der vorherigen Ansprüche, wobei der Gleichspannungswandler (4) Sensoren für Temperatur, Spannung und/oder Strom aufweist.

12. Elektrische Anordnung nach einem der vorherigen Ansprüche, wobei der Gleichspannungswandler (4) ein Hochsetzsteller ist, wobei der Hochsetzsteller insbesondere mehrere Hochsetzstufen aufweist, die phasenversetzt betrieben werden.

13. Elektrische Anordnung nach einem der vorherigen Ansprüche, wobei zwei oder mehr elektrische Anordnungen parallel geschaltet sind.

14. Brennstoffzellensystem, umfassend:
• eine Brennstoffzelle (5) und
• eine elektrische Anordnung (10) nach einem der vorherigen Ansprüche.

15. Verwendung eines Brennstoffzellensystems (7) nach Anspruch 15 in einer maritimen Vorrichtung oder einer Automotive-Vorrichtung oder einer Heavy-Duty-Applikation, insbesondere einer Eisenbahn-Applikation.
